# EUROPÄISCHE PATENTANMELDUNG

(11) **EP 2 725 492 A1**
(43) Veröffentlichungstag der Anmeldung: **30.04.2014**
(21) Anmeldenummer: 13004676.6
(22) Anmeldetag: 26.09.2013
(51) Int. Cl.: G06F 11/10, G06F 9/30

(54) **Verwaltung von Datenelementen in einem Stapelspeicher**

(30) Priorität: 23.10.2012 DE 102012020782
(71) Anmelder: Giesecke & Devrient GmbH, 81677 München (DE)
(72) Erfinder: Eckardt, Stefan, 82291 Mammendorf (DE)

(57) **Zusammenfassung**

Es werden ein Verfahren zum Betreiben eines portablen Datenträgers mit einem Mikroprozessor zur Ausführung von Befehlen eines Computerprogramms, einer Speichereinheit zur Speicherung von Datenelementen und einem vom Mikroprozessor verwalteten Stapelspeicher, der in der Speichereinheit implementiert ist, sowie ein solcher portabler Datenträger beschrieben. Das Verfahren umfasst die folgenden Schritte: (a) das Generieren eines Ist-Fehlererkennungscodes über die auf dem Stapelspeicher abgelegten Datenelemente bei einem Zugriff des Mikroprozessors auf den Stapelspeicher, bei dem wenigstens ein Datenelement auf dem Stapelspeicher abgelegt und/oder von diesem entfernt werden soll; und (b) das Vergleichen des in Schritt (a) generierten Ist-Fehlererkennungscodes mit einem Soll-Fehlererkennungscode, der bei einem vorhergehenden Zugriff des Mikroprozessors auf den Stapelspeicher über die auf dem Stapelspeicher abgelegten Datenelemente generiert worden ist.

## Beschreibung

Die Erfindung betrifft allgemein das technische Gebiet der Speicherverwaltung und spezieller das Gebiet der Verwaltung eines auch als Stack bezeichneten Stapelspeichers. Besonders eignet sich die Erfindung zum Einsatz bei portablen Datenträgern, die eine zentrale Verarbeitungseinheit ("central processing unit"; CPU) vorzugsweise in Form eines Mikroprozessors aufweisen und beispielsweise als Chipkarte (Smart Card) oder als kompaktes Chipmodul in unterschiedlichen Bauformen ausgestaltet sein können. Die Erfindung ist jedoch nicht auf dieses Einsatzgebiet beschränkt, sondern allgemein zur Verwaltung eines Stapelspeichers bei programmgesteuerten Vorrichtungen mit einer zentralen Verarbeitungseinheit einsetzbar.

Portable Datenträger in Form von Chipkarten mit einem Mikroprozessor, auch Mikroprozessor-Chipkarten oder Prozessorkarten genannt, werden in vielen sicherheitskritischen Bereichen eingesetzt, beispielsweise als Ausweisdokumente, zum Nachweis einer Zugangsberechtigung z.B. zu einem Mobilfunknetz oder zur Durchführung von Transaktionen des bargeldlosen Zahlungsverkehrs. Der Einsatz der Chipkarte erfolgt dabei häufig im Zusammenspiel mit einem für die jeweilige Anwendung vorgesehenen Endgerät mit einer Leseeinheit, die dazu ausgestaltet ist, nach einer vorhergehenden Authentisierung sicherheitskritische Daten aus einer solchen Chipkarte auszulesen.

Bei der Durchführung von sicherheitskritischen Anwendungen durch einen portablen Datenträger, beispielsweise eine Chipkarte, ist ein Schutz des portablen Datenträgers und der darin hinterlegten sicherheitskritischen Daten, wie beispielsweise kryptographische Schlüssel, vor Angriffen und unberechtigten Manipulationen erforderlich. Ein Beispiel einer unberechtigten Manipulation eines portablen Datenträgers ist die Störung der Strom- und Taktversorgung des die Anwendung ausführenden Mikroprozessors des portablen Datenträgers durch Spannungsspitzen bzw. Lichtblitze. Ein weithin aus dem Stand der Technik bekannter Angriff ist dabei die sogenannte differentielle Fehleranalyse (DFA = Differential Fault Analysis), mit der sich der geheime Schlüssel einer mittels eines Mikroprozessors durchgeführten kryptographischen Berechnung auf einem portablen Datenträger ermitteln lässt. Bei einem DFA-Angriff werden in dem Mikroprozessor, der eine kryptographische Berechnung durchführt, Berechnungsfehler ausgelöst, was durch die vorstehend erwähnten Spannungsspitzen bzw. Lichtblitze erreicht werden kann. Aus den erzeugten Fehlern kann dann mittels mathematischer Methoden der für die kryptographische Berechnung verwendete geheime Schlüssel ermittelt werden. Bei kombinierten Spähangriffen wird über Seitenkanäle wie z.B. dem Stromverbrauch oder die elektromagnetische Abstrahlung des portablen Datenträgers ein geeigneter Zeitpunkt für eine gezielte Störung ermittelt und zu diesem Zeitpunkt die Störung durchgeführt. Beispielsweise können signifikante Merkmale im Stromverbrauch wie z.B. Peaks des Stromverlaufs auf geeignete Zeitpunkte zum Einbringen einer Störung hinweisen.

Aus dem Stand der Technik sind verschiedene Gegenmaßnahmen bekannt, die dazu geeignet sind, derartige Angriffe auf portable Datenträger ins Leere laufen zu lassen oder zumindest deren negative Auswirkungen zu reduzieren. Beispielsweise wird bei der Erkennung eines Angriffs, mit dem die durch einen Mikroprozessor durchgeführte kryptographische Berechnung manipuliert wird, mittels einer Fehlerroutine eine Endlosschleife erzeugt, welche die Fortsetzung der eigentlichen Programmroutine verhindert. Diese Endlosschleife besteht aus Sprungbefehlen, welche immer zu der Adresse des jeweiligen Sprungbefehls zurückspringen. Jedoch können insbesondere mittels mehrfacher DFA-Angriffe die Befehle in der Endlosschleife derart manipuliert werden, dass die Schleife verlassen wird und der eigentliche Programmcode ausgeführt wird.

Als weitere Gegenmaßnahme gegen derartige Angriffe werden sicherheitskritische Berechnungen von Kryptoalgorithmen, wie z.B. DES (Data Encryption Standard), 3DES oder AES (Advanced Encryption Standard), wenigstens zweimal ausgeführt und die dabei erhaltenen Ergebnisse werden miteinander verglichen. Falls aufgrund eines solchen Vergleichs der Verdacht eines Angriffs bzw. einer Störung bei einer der Durchführungen aufkommt, wird das Rechenergebnis verworfen und weitere Gegenmaßnahmen können ergriffen werden, wie beispielsweise das Sperren des Mikroprozessors der Chipkarte, das Löschen von Speicherbereichen oder dergleichen.

Der Erfindung liegt die Aufgabe zugrunde, einen portablen Datenträger mit einem Mikroprozessor und einer Speichereinheit resistenter insbesondere gegenüber den vorstehend beschriebenen Angriffen zu machen, indem eine weitere Gegenmaßnahme gegen derartige Angriffe bereitgestellt wird.

Diese Aufgabe wird durch ein Verfahren zum Betreiben eines portablen Datenträgers mit einem Mikroprozessor und einer Speichereinheit gemäß Anspruch 1 sowie durch einen solchen portablen Datenträger gemäß Anspruch 10 gelöst:

Die Erfindung basiert auf dem Grundgedanken, bei einem portablen Datenträger mit einem Mikroprozessor zur Ausführung von Befehlen eines Computerprogramms, einer Speichereinheit zur Speicherung von Datenelementen und einem vom Mikroprozessor verwalteten Stapelspeicher, der Teil der Speichereinheit ist, mittels eines Soll- und eines Ist-Fehlererkennungscodes laufend oder zumindest in gewissen Abständen die Integrität der auf dem Stapelspeicher abgelegten Datenelemente zu überprüfen.

Hierzu wird, vorzugsweise ausgehend von einem Anfangszustand, in dem der Stapelspeicher leer ist, d.h. keine Datenelemente auf diesem abgelegt sind, bei einem erstmaligen Zugriff auf den Stapelspeicher, bei dem wenigstens ein Datenelement auf dem Stapelspeicher abgelegt wird, ein Soll-Fehlererkennungscode über das wenigstens eine Datenelement generiert und vorzugsweise oberhalb des wenigstens einen Datenelements auf dem Stapelspeicher abgelegt. Bei einem weiteren Zugriff auf den Stapelspeicher, bei dem wenigstens ein weiteres Datenelement auf dem Stapelspeicher abgelegt und/ oder wenigstens eines der auf dem Stapelspeicher abgelegten Datenelemente entfernt werden soll, wird ein Ist-Fehlererkennungscode über die auf dem Stapelspeicher abgelegten Datenelemente generiert und mit dem bei einem erstmaligen Zugriff auf den Stapelspeicher generierten Soll-Fehlererkennungscode verglichen.

Wird bei diesem Vergleich festgestellt, dass der Soll-Fehlererkennungscode mit dem Ist-Fehlererkennungscode nicht übereinstimmt, kann dies daran liegen, dass im Zeitraum zwischen der Generierung des Soll- und der Generierung des Ist-Fehlererkennungscodes ein Angriff auf die auf dem Stapelspeicher abgelegten Datenelemente erfolgt ist und diese korrumpiert worden sind, so dass in diesem Fall geeignete Gegenmaßnahmen ergriffen werden können, z.B. ein Sperren des portablen Datenträgers.

Wird andernfalls festgestellt, dass der Soll- mit dem Ist-Fehlererkennungscode übereinstimmt, wird der weitere Zugriff auf den Stapelspeicher durchgeführt, d.h. das wenigstens eine weitere Datenelement wird auf dem Stapelspeicher abgelegt und/ oder wenigstens eines der auf dem Stapelspeicher abgelegten Datenelemente wird vom Stapelspeicher entfernt, wobei vorzugsweise vorher noch der bei einem erstmaligen Zugriff auf den Stapelspeicher generierte und auf dem Stapelspeicher abgelegte Soll-Fehlererkennungscode vom Stapelspeicher entfernt wird. Ferner wird, sofern nach dem weiteren Zugriff noch Datenelemente auf dem Stapelspeicher abgelegt sind, über die nunmehr auf dem Stapelspeicher abgelegten Datenelemente ein neuer Soll-Fehlererkennungscode generiert, der vorzugsweise wiederum oberhalb der nunmehr auf dem Stapelspeicher abgelegten Datenelemente auf dem Stapelspeicher abgelegt wird, um bei einem erneuten Zugriff des Mikroprozessors auf den Stapelspeicher als Soll-Fehlererkennungscode für einen Vergleich mit einem beim erneuten Zugriff generierten Ist-Fehlererkennungscode zur Verfügung zu stehen.

Somit wird gemäß einem ersten Aspekt der Erfindung ein Verfahren zum Betreiben eines portablen Datenträgers mit einem Mikroprozessor zur Ausführung von Befehlen eines Computerprogramms, einer Speichereinheit zur Speicherung von Datenelementen und einem vom Mikroprozessor verwalteten Stapelspeicher, der Teil der Speichereinheit ist, bereitgestellt. Dabei umfasst das Verfahren die folgenden Schritte: (a) das Generieren eines Ist-Fehlererkennungscodes über die auf dem Stapelspeicher abgelegten Datenelemente bei einem Zugriff des Mikroprozessors auf den Stapelspeicher, bei dem wenigstens ein Datenelement auf dem Stapelspeicher abgelegt und/ oder von diesem entfernt werden soll; und (b) das Vergleichen des in Schritt (a) generierten Ist-Fehlererkennungscodes mit einem Soll-Fehlererkennungscode, der bei einem vorhergehenden Zugriff des Mikroprozessors auf den Stapelspeicher über die auf dem Stapelspeicher abgelegten Datenelemente generiert worden ist. Selbstverständlich ist es für einen sinnvollen Vergleich der Fehlererkennungscodes zu unterschiedlichen Zeitpunkten notwendig, dass in die Generierung des Soll-Fehlererkennungscodes und des Ist-Fehlererkennungscodes dieselben auf dem Stapelspeicher abgelegten Datenelemente einfließen.

Wird beim Schritt des Vergleichens festgesellt, dass der in Schritt (a) generierte Ist-Fehlererkennungscode nicht mit dem Soll-Fehlererkennungscode übereinstimmt, der bei einem vorhergehenden Zugriff des Mikroprozessors auf den Stapelspeicher über die auf dem Stapelspeicher abgelegten Datenelemente generiert worden ist, kann erfindungsgemäß davon ausgegangen werden, dass die auf dem Stapelspeicher abgelegten Datenelemente möglicherweise durch einen Angriff korrumpiert worden sind und es können geeignete Gegenmaßnahmen ergriffen werden, wie beispielsweise das Eintreten in eine Endlosschleife, ein Interrupt oder die Sperrung des weiteren Betriebs des portablen Datenträgers.

Vorzugsweise umfasst das Verfahren den weiteren Schritt, dass für den Fall, dass beim Schritt des Vergleichens festgesellt wird, dass der in Schritt (a) generierte Ist-Fehlererkennungscode mit dem Soll-Fehlererkennungscode übereinstimmt, der Zugriff auf den Stapelspeicher vom Mikroprozessor durchgeführt wird, d.h. wenigstens ein Datenelement auf dem Stapelspeicher abgelegt und/oder von diesem entfernt wird, wobei vorzugsweise vorher noch, sofern der Soll-Fehlererkennungscode auf dem Stapelspeicher abgelegt ist, der Soll-Fehlererkennungscode vom Stapelspeicher entfernt wird. Ferner ist bei diesem bevorzugten Schritt vorgesehen, dass ein neuer Soll-Fehlererkennungscode über die nunmehr, d.h. nach dem Zugriff durch den Mikroprozessor auf dem Stapelspeicher abgelegten Datenelemente generiert wird und vorzugsweise oberhalb der nunmehr auf dem Stapelspeicher abgelegten Datenelemente auf dem Stapelspeicher abgelegt wird, um bei einem erneuten Zugriff des Mikroprozessors auf den Stapelspeicher als Soll-Fehlererkennungscode für einen Vergleich mit einem dann generierten Ist-Fehlererkennungscode zur Verfügung zu stehen. Diese Ausgestaltung weist den besonderen Vorteil auf, dass der Mikroprozessor zur Überprüfung der Übereinstimmung des Soll- mit dem Ist-Fehlererkennungscode schnell auf den bei einem vorhergehenden Zugriff auf den Stapelspeicher abgelegten Soll-Fehlererkennungscode zugreifen kann und somit der Ablauf des durch den Mikroprozessor ausgeführten Computerprogramms nur wenig modifiziert bzw. verlangsamt wird.

Für den Fall, dass das vom Mikroprozessor ausgeführte Computerprogramm aus einer Hauptroutine sowie einer oder mehreren Subroutinen besteht werden gemäß bevorzugter Ausführungsformen der Erfindung beim Aufruf einer Subroutine des vom Mikroprozessor ausgeführten Computerprogramms durch eine aufrufende Routine des vom Mikroprozessor ausgeführten Computerprogramms ein Soll-Fehlererkennungscode über die auf dem Stapelspeicher abgelegten Datenelemente generiert und beim Rücksprung aus dieser Subroutine in die aufrufende Routine des vom Mikroprozessor ausgeführten Computerprogramms ein Ist-Fehlererkennungscode über die auf dem Stapelspeicher abgelegten Datenelemente generiert, der mit dem Soll-Fehlererkennungscode verglichen wird. Dabei kann die aufrufende Routine die Hauptroutine oder ebenfalls eine Subroutine sein.

Vorzugsweise wird gemäß alternativer Ausführungsformen nur bei jedem n-ten Zugriff auf den Stapelspeicher, wobei n eine natürliche Zahl größer eins ist, ein Ist-Fehlererkennungscode über die auf dem Stapelspeicher abgelegten Datenelemente generiert und mit dem bei einem vorhergehenden Zugriff auf den Stapelspeicher generierten Soll-Fehlererkennungscode verglichen.

Gemäß bevorzugter Ausführungsformen der Erfindung handelt es sich bei dem Fehlererkennungscode, der bei einem Zugriff des Mikroprozessors auf den Stapelspeicher generiert wird, um eine Prüfsumme. Eine bevorzugte Prüfsumme kann beispielsweise mittels einer zyklischen Redundanzprüfung ("Cyclic Redundancy Check"; CRC) generiert werden, mit der die Integrität der auf dem Stapelspeicher abgelegten Datenelemente feststellbar ist. Vorzugsweise kann es sich gemäß alternativer Ausführungsformen bei dem Fehlererkennungscode um eine kryptographische Prüfsumme handeln, wobei die kryptographische Prüfsumme unter Verwendung eines kryptographischen Geheimnisses erzeugt wird, insbesondere unter Verwendung eines symmetrischen und/oder asymmetrischen kryptographischen Verfahrens. Dabei können beliebige, an sich aus dem Stand der Technik bekannte Verfahren zur Generierung solcher Prüfsummen verwendet werden, insbesondere basierend auf kryptographischen Hash-Funktionen, wie z. B. SHA-1, MD5, HMAC-SHA1, HMAC-MD5, AES-CBC-MAC. Ebenso kann der Fehlererkennungscode basierend auf Signaturen mit geeigneten Signatur-Algorithmen generiert werden, wie z. B. RSA, DSA, EC-DSA und dergleichen. Neben den vorstehend erwähnten bevorzugten Fehlererkennungscodes ist dem Fachmann eine Vielzahl von weiteren Fehlererkennungscodes bekannt, die erfindungsgemäß dazu geeignet sind, die Integrität der auf dem Stapelspeicher abgelegten Datenelemente zu überprüfen. Für die Details zu weiteren erfindungsgemäß einsetzbaren Fehlererkennungscodes wird auf das Kapitel 6.5 des Buches "Handbuch der Chipkarten" von W. Rankl und W. Effing, 5. Auflage, 2008, verwiesen, auf das hiermit vollumfänglich Bezug gen genommen wird.

Vorzugsweise umfasst der Mikroprozessor zur Verwaltung des Stapelspeichers, der Teil der Speichereinheit ist, ein dediziertes Stapelregister. Die Erfindung kann jedoch auch vorteilhaft bei Mikroprozessoren eingesetzt werden, bei denen ein allgemeines Register oder Mehrzweckregister zur Verwaltung des Stapelspeichers, d.h. als Register für einen Stack-Pointer eingesetzt wird.

Gemäß bevorzugter Ausführungsformen der Erfindung umfasst der portable Datenträger ferner eine Prüfeinheit mit einer Prüfsummenlogik, die dazu ausgestaltet ist, den Schritt des Generierens eines Fehlererkennungscodes über die auf dem Stapelspeicher abgelegten Datenelemente und/oder den Schritt des Vergleichens des Soll-Fehlererkennungscodes mit dem Ist-Fehlererkennungscode durchzuführen. Gemäß alternativer Ausführungsformen der Erfindung können jedoch wenigstens einige Schritte des erfindungsgemäßen Verfahrens auch in Software oder in einer Kombination aus Software und Hardware implementiert werden.

Gemäß einem zweiten Aspekt der Erfindung wird ein portabler Datenträger mit einem Mikroprozessor zur Abarbeitung von Befehlen eines Computerprogramms, einer Speichereinheit zur Speicherung von Datenelementen und einem vom Mikroprozessor verwalteten Stapelspeicher, der Teil der Speichereinheit ist, bereitgestellt, der dazu ausgestaltet ist, die vorstehend beschriebenen erfindungsgemäße Verfahren durchzuführen.

Ein portabler Datenträger im Sinn der Erfindung ist ein Computersystem, bei dem die Ressourcen, d.h. Speicherressourcen und/ oder Rechenkapazität (Rechenleistung) begrenzt sind, z.B. eine Chipkarte (Smart Card, Mikroprozessor-Chipkarte). Der portable Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines Tokens mit einem anderen Formfaktor. Der portable Datenträger kann weiter eine oder mehrere beliebige Schnittstellen für kontaktlose und/ oder kontaktbehaftete Kommunikation mit einem Lesegerät oder Datenverarbeitungssystem (z.B. Personal Computer, Workstation, Server) haben. Der portable Datenträger kann z.B. als SIM-Karte für ein Mobiltelefon, Zahlungsverkehrskarte, Gesundheitswesenkarte oder Signaturkarte im Einsatz sein.

Während die vorliegende Erfindung somit insbesondere bei portablen Datenträgern, wie z. B. Chipkarten, Smart Cards, Mobilfunkkarten, sicheren Multimediakarten und dergleichen, vorteilhaft einsetzbar ist, kann diese jedoch selbstverständlich auch bei jedem beliebigen System mit einem Mikroprozessor eingesetzt werden, bei dem ein von Angriffen geschützter korrekter Programmablauf sichergestellt werden muss.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig. 1: eine schematische Darstellung einer bevorzugten Ausführungsform eines erfindungsgemäßen portablen Datenträgers in Form einer Chipkarte in Kommunikation mit einer externen Instanz in Form einer Leseeinheit,
- Fig. 2a, 2b: schematische Darstellungen, die die Arbeitsweise eines portablen Datenträgers in Form einer Chipkarte gemäß einer bevorzugten Ausführungsform der Erfindung veranschaulichen, und
- Fig. 3: ein Ablaufdiagram, das die Arbeitsweise eines portablen Datenträgers in Form einer Chipkarte gemäß einer bevorzugten Ausführungsform der Erfindung veranschaulicht.

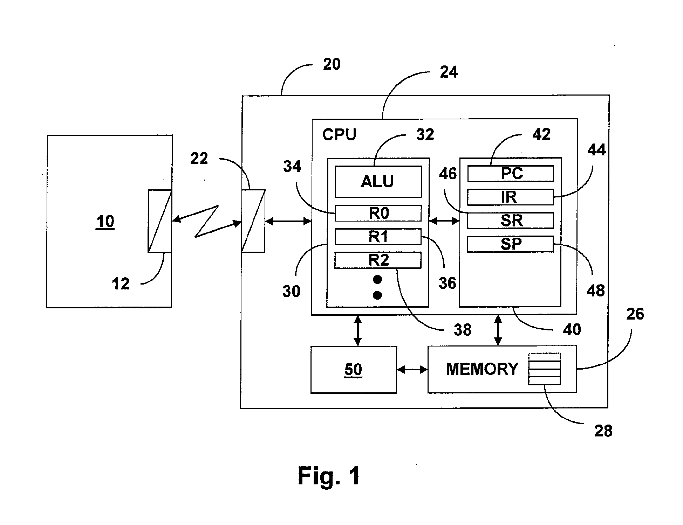

Figur 1 zeigt eine schematische Darstellung einer bevorzugten Ausführungsform eines erfindungsgemäßen portablen Datenträgers in Form einer Chipkarte 20. Die Chipkarte 20 ist dazu ausgestaltet mit einer externen Instanz in Form einer Leseeinheit 10 Daten auszutauschen, die z.B. Teil eines Terminals, eines mobilen Endgeräts, wie beispielsweise eines Mobiltelefons, oder einer ähnlichen Vorrichtung sein kann. Als ein Austausch von Daten wird hier eine Signalübertragung, eine wechselseitige Steuerung und in einfachen Fällen auch eine Verbindung zwischen der Leseeinheit 10 und der Chipkarte 20 verstanden. Im Allgemeinen kann ein Datenaustausch durch das aus der Informationstheorie bekannte Sender-Empfänger-Modell beschrieben werden: Daten bzw. Informationen werden in Zeichen kodiert und dann von einem Sender über einen Übertragungskanal an einen Empfänger übertragen. Dabei ist entscheidend, dass der Sender und der Empfänger dieselbe Kodierung verwenden, damit der Empfänger die Nachricht verstehen kann, d.h. die empfangenen Daten dekodieren kann.

Zur Datenübertragung bzw. Kommunikation zwischen der Chipkarte 20 und der Leseeinheit 10 weisen sowohl die Chipkarte 20 als auch die Leseeinheit 10 vorzugsweise geeignete Kommunikationsschnittstellen 22 und 12 auf. Die Schnittstellen 22 und 12 können beispielsweise so ausgestaltet sein, dass die Kommunikation zwischen diesen bzw. zwischen der Chipkarte 20 und der Leseeinheit 10 kontaktlos, d.h. über die Luftschnittstelle, erfolgt. Alternativ kann die Chipkarte 20 über die Schnittstelle 22 galvanisch, d.h. kontaktbehaftet, mit der Schnittstelle 12 der Leseeinheit 10 in Verbindung stehen. In diesem Fall ist die Schnittstelle 22 in der Regel als ein auf der Chipkarte 20 angeordnetes Kontaktfeld mit mehreren Kontaktflächen zum Datenaustausch mit der Leseeinheit 10 ausgebildet. Selbstverständlich werden von der vorliegenden Erfindung auch Chipkarten oder andere portable Datenträger umfasst, die sowohl eine Schnittstelle zur kontaktbehafteten als auch eine Schnittstelle zur kontaktlosen Kommunikation mit einer externen Instanz, beispielsweise in Form einer Leseeinheit, aufweisen und die dem Fachmann als Dual-Interface-Chipkarten bekannt sind.

Neben der Schnittstelle 22 zur Kommunikation mit der Leseeinheit 10 umfasst die Chipkarte 20 eine zentrale Verarbeitungseinheit ("central processing unit"; CPU) beispielsweise in Form eines Mikroprozessors 24, die in Kommunikationsverbindung mit der Schnittstelle 22 steht. Bekanntermaßen gehören zu den primären Aufgaben der CPU bzw. des Mikroprozessors 24 das Ausführen von arithmetischen und logischen Funktionen und das Lesen und Schreiben von Datenelementen, wie dies durch ein auf dem Mikroprozessor 24 ablaufendes Computerprogramm in Form von Maschinenbefehlen definiert wird. Hierzu umfasst der Mikroprozessor 24 bei der in Figur 1 dargestellten bevorzugten Ausführungsform eine Recheneinheit bzw. Rechenwerk 30 sowie eine Steuereinheit bzw. Steuerwerk 40.

Die Recheneinheit 30 des Mikroprozessors 24 besteht vorzugsweise im Wesentlichen aus einer arithmetisch-logischen Einheit ("arithmetic logic unit"; ALU) 32 sowie mehreren Arbeits- bzw. Datenregistern, von denen in Figur 1 beispielhaft drei Register, nämlich die Register R0, R1 und R2 dargestellt sind und mit den Bezugszeichen 34, 36 und 38 gekennzeichnet sind. In der Regel wird die Recheneinheit 30 jedoch mehr (wie durch die Punkte in Figur 1 angedeutet) als die in Figur dargestellten drei Register R0, R1 und R2 aufweisen, beispielsweise vier, acht oder mehr Register. Die Recheneinheit 30 ist bekanntermaßen im Wesentlichen dazu ausgestaltet, mittels der ALU 32 Datenelemente gemäß den Maschinenbefehlen des vom Mikroprozessor 24 ausgeführten Computerprogramms miteinander zu verknüpfen und die Ergebnisse derartiger Verknüpfungen beispielsweise in den Registern R0, R1 oder R2 zur Weiterverarbeitung abzulegen. Hierbei kann beispielsweise wenigstens eines der Register R0, R1 und R2 als Akkumulator für die ALU 32 dienen.

Die Steuereinheit 40 des Mikroprozessors 24 dient bekanntermaßen im Wesentlichen dazu, die Arbeitsweise der Recheneinheit 30 und gegebenenfalls weiterer Komponenten des Mikroprozessors 24 auf Basis der sukzessiven Abarbeitung der Maschinenbefehle eines auf dem Mikroprozessor 24 ablaufenden Computerprogramms zu steuern. Hierzu umfasst ebenso die Steuereinheit 40 des Mikroprozessors 24 mehrere Register, und zwar vorzugsweise insbesondere einen Befehlszähler ("program counter"; PC) 42, ein Befehlsregister ("instruction register"; IR) 44, ein Statusregister ("status register"; SR) 46 sowie ein Stapelregister ("stack pointer"; SP) 48. Der Befehlszähler PC enthält in der Regel jeweils die Speicheradresse des nächsten auszuführenden Maschinenbefehls des auf dem Mikroprozessor 24 ablaufenden Computerprogramms. Der aktuell auszuführende Maschinenbefehl ist im Befehlsregister IR hinterlegt. Das Statusregister SR ist dazu ausgestaltet, Rückmeldungen aus der Recheneinheit 30 und der Steuereinheit 40 aufzunehmen, welche die Adressfortschaltung in dem von dem Mikroprozessor 24 ausgeführten Computerprogramm beeinflussen können. Wie dies nachstehend im Detail beschrieben wird, dient das Stapelregister SP 48 der Steuereinheit 40 des Mikroprozessors 24 zur Verwaltung eines Stapelspeichers (nachstehend auch "Stack" gennannt), der in einer Speichereinheit ("memory unit") 26 des portablen Datenträgers 20 implementiert ist und in der schematischen Darstellung von Figur 1 mit dem Bezugszeichen 28 gekennzeichnet ist. Hierzu enthält das Stapelregister SP 48 der Steuereinheit 40 üblicherweise die Speicheradresse, die das variable Ende des Stapelspeichers 28 in der Speichereinheit 26 definiert.

Die Speichereinheit 26, die in Kommunikationsverbindung mit dem Mikroprozessor 24 steht, kann vorzugsweise einen flüchtigen Arbeitsspeicher (RAM) beispielsweise zur Aufnahme der Maschinenbefehle eines vom Mikroprozessor 24 auszuführenden Computerprogramms umfassen. Ferner kann die Speichereinheit 26 einen nichtflüchtigen, vorzugsweise wieder beschreibbaren Speicher umfassen, um beispielsweise im unbestromten Zustand die Maschinenbefehle eines vom Mikroprozessor 24 auszuführenden Computerprogramms aufzunehmen. Vorzugsweise handelt es sich bei dem nichtflüchtigen, wieder beschreibbaren Speicher um einen Flash-Speicher (Flash-EEPROM). Dabei kann es sich beispielsweise um einen Flash-Speicher mit einer NAND- oder einer NOR-Architektur handeln. Selbstverständlich kann die Speichereinheit 26 auch einen Festwertspeicher ("read only memory"; ROM) umfassen.

Wie dies dem Fachmann bekannt ist, kann die Kommunikation sowohl zwischen dem Mikroprozessor 24 und der Speichereinheit 26 und den weiteren Komponenten des portablen Datenträgers 20 in Form einer Chipkarte als auch zwischen der Recheneinheit 30 und der Steuereinheit 40 des Mikroprozessors 24 vorzugsweise über einen oder mehrere geeignet ausgestaltete Daten-, Adress- und/ oder Steuerbusse erfolgen, wie dies in Figur 1 durch gerade Doppelpfeile schematisch angedeutet ist. Der Fachmann wird ferner erkennen, dass ein erfindungsgemäßer portabler Datenträger 20 noch weitere als die in Figur 1 dargestellten elektronischen Komponenten aufweisen kann. So könnte der portable Datenträger 20 beispielsweise ferner einen Krypto-Coprozessor zur Durchführung kryptographischer Berechnungen und/ oder eine mit dem Mikroprozessor 24 interagierende Speicherverwaltungseinheit ("memory management unit"; MMU) zur Verwaltung der Speichereinheit 26 aufweisen. Eine solche MMU könnte auch Teil des Mikroprozessors 24 sein. Ferner könnte der Mikroprozessor 24 neben den Registern der Recheneinheit 30 eine eigene interne Speichereinheit aufweisen.

Wie dies bereits vorstehend beschrieben worden ist, umfasst die Steuereinheit 40 des Mikroprozessors 24 vorzugsweise ein dediziertes Stapelregister SP 48, das es dem Mikroprozessor 24 ermöglicht, bei der Abarbeitung eines Computerprogramms in Form von Maschinenbefehlen einen Stapelspeicher (auch "Stack" genannt) 28 zu verwalten und zu verwenden. Der Stapelspeicher 28 ist ein bestimmter Bereich des durch die Speichereinheit 26 bereitgestellten Arbeitsspeichers mit einer festen Ursprungsadresse und einer variablen Größe. Wie bereits vorstehend erwähnt, verweist bzw. zeigt das Stapelregister, d.h. der "Stackpointer" SP 48 (auch Stapelzeiger genannt) auf die Speicheradresse, an der sich das zuletzt auf dem Stapelspeicher 28 abgelegte Datenelement befindet. Zu Anfang ist der Stapelspeicher 28 leer und das Stapelregister SP 48 verweist auf die Anfangsadresse des Stapelspeichers 28. In der Regel befindet sich die Anfangsadresse des Stapelspeichers 28 bei einer höheren Adresse als dessen variables Ende, d.h. der Stapelspeicher 28 wächst üblicherweise in Richtung niedriger Adressen des durch die Speichereinheit 26 bereitgestellten Arbeitsspeichers.

Der Mikroprozessor 24 ist dazu ausgestaltet, auf den Stapelspeicher züzugreifen, d.h. Datenelemente auf dem Stapelspeicher 28 abzulegen bzw. von diesem wieder zu entfernen, beispielsweise indem vom Mikroprozessor 24 entsprechende Befehle abgearbeitet werden. Vorzugsweise handelt es sich bei diesen Befehlen um die dem Fachmann bekannten "push"- und "pull"-Befehle oder vergleichbare Befehle. Bei einem "push"-Befehl wird ein Datenelement bei der Speicheradresse der Speichereinheit 26 abgelegt, auf die momentan das Stapelregister SP 48 verweist, und das Stapelregister SP 48 wird um die Größe des auf dem Stapelspeicher 28 abgelegten Datenelements angepasst. Bei einem "pull"-Befehl wird das Datenelement vom Stapelspeicher 28 entfernt, das bei der Speicheradresse der Speichereinheit 26 abgelegt ist, auf die momentan das Stapelregister SP 48 zeigt, und das Stapelregister SP 48 wird um die Größe des von dem Stapelspeicher 28 entfernten Datenelements angepasst.

Ferner ist der Mikroprozessor 24 vorzugsweise dazu ausgestaltet, dass immer dann, wenn der Mikroprozessor 24 bei der Abarbeitung eines Computerprogramms nicht nur sequentiell aufeinanderfolgende Befehle abzuarbeiten hat, sondern, wie insbesondere beim Aufruf einer Subroutine einen Programmsprung auszuführen hat, der Stapelspeicher 28 zur Aufnahme der Inhalte vor allem wenigstens einiger der Register der Steuereinheit 40 des Mikroprozessors 24 dient, damit diese nach dem Abarbeiten der Subroutine dem Mikroprozessor 24 wieder zur Verfügung stehen.

Neben der vorstehend beschriebenen im Wesentlichen herkömmlichen Arbeitsweise des Mikroprozessors 24 und dessen Implementierung des Stapelspeichers 28 ist gemäß der vorliegenden Erfindung der portable Datenträger 20 in Form einer Chipkarte und vorzugsweise dessen Mikroprozessor 24 dazu ausgestaltet, bei einem Zugriff auf den Stapelspeicher 28 die Integrität bzw. Unversehrtheit der auf dem Stapelspeicher 28 abgelegten Datenelemente zu überprüfen. Mit anderen Worten: gemäß der vorliegenden Erfindung ist der portable Datenträger 20 in Form einer Chipkarte und vorzugsweise dessen Mikroprozessor 24 dazu ausgestaltet, bei einem Zugriff auf den Stapelspeicher 28 zu überprüfen, ob die auf dem Stapelspeicher 28 abgelegten Datenelemente im Vergleich zu einem vorhergehenden Zugriff auf den Stapelspeicher 28 durch einen Angriff korrumpiert bzw. geändert worden sind, indem z.B. ein oder mehrere Bits eines auf dem Stapelspeicher 28 abgelegten Datenelements durch den Angriff gekippt d.h. invertiert worden sind.

Hierzu wird, vorzugsweise, aber nicht notwendigerweise ausgehend von einem Anfangszustand, in dem der Stapelspeicher 28 leer ist, d.h. keine Datenelemente auf diesem abgelegt sind, bei einem erstmaligen Zugriff auf den Stapelspeicher 28, bei dem ein oder mehrere Datenelemente auf dem Stapelspeicher 28 abgelegt werden, ein Soll-Fehlererkennungscode ("error detection code"; EDC) über die auf dem Stapelspeicher abgelegten Datenelemente generiert und vorzugsweise oberhalb der Datenelemente, d.h. in der Regel bei niedrigeren Adressen auf dem Stapelspeicher 28 abgelegt.

Bei einem weiteren zu einem späteren Zeitpunkt stattfindenden Zugriff auf den Stapelspeicher 28, bei dem ein oder mehrere weitere Datenelemente auf dem Stapelspeicher 28 abgelegt und/ oder eines oder mehrere der auf dem Stapelspeicher bereits abgelegten Datenelemente entfernt werden sollen, wird ein Ist-Fehlererkennungscode über die auf dem Stapelspeicher 28 abgelegten Datenelemente generiert und mit dem beim vorhergehenden Zugriff auf den Stapelspeicher 28 generierten Soll-Fehlererkennungscode verglichen. Wird bei diesem Vergleich festgestellt, dass der Soll-Fehlererkennungscode mit dem Ist-Fehlererkennungscode nicht übereinstimmt, kann dies daran liegen, dass im Zeitraum zwischen der Generierung des Soll- und der Generierung des Ist-Fehlererkennungscodes ein Angriff auf die auf dem Stapelspeicher 28 abgelegten Datenelemente erfolgt ist und diese beispielsweise durch Bitinversion korrumpiert worden sind, so dass in diesem Fall geeignete Gegenmaßnahmen ergriffen werden können, z.B. ein Sperren des portablen Datenträgers 20.

Wird andernfalls festgestellt, dass der Soll- mit dem Ist-Fehlererkennungscode übereinstimmt, so sind die auf dem Stapelspeicher 28 abgelegten Datenelemente integer, d.h. nicht durch einen Angriff korrumpiert bzw. geändert worden und es kann mit der normalen Abarbeitung des nächsten Maschinenbefehls fortgefahren werden, nachdem der weitere Zugriff auf den Stapelspeicher 28 durchgeführt worden ist, d.h. die weiteren Datenelemente auf dem Stapelspeicher 28 abgelegt und/oder eines oder mehrere der auf dem Stapelspeicher 28 abgelegten Datenelemente vom Stapelspeicher 28 entfernt worden sind. Vorzugsweise wird vor der Durchführung des weiteren Zugriffs auf den Stapelspeicher 28 noch der beim vorhergehenden Zugriff auf den Stapelspeicher 28 generierte und auf dem Stapelspeicher 28 abgelegte Soll-Fehlererkennungscode vom Stapelspeicher 28 entfernt. Sofern nach dem weiteren Zugriff noch Datenelemente auf dem Stapelspeicher 28 vorhanden sind, wird über die nunmehr auf dem Stapelspeicher 28 abgelegten Datenelemente ein neuer Soll-Fehlererkennungscode generiert. Vorzugsweise wird auch dieser neu generierte Soll-Fehlererkennungscode oberhalb der nunmehr auf dem Stapelspeicher 28 abgelegten Datenelemente, d.h. in der Regel bei niedrigeren Adressen auf dem Stapelspeicher abgelegt, um bei einem nachfolgenden Zugriff für einen Vergleich mit einem dann generierten Ist-Fehlererkennungscode zur Verfügung zu stehen.

Vorzugsweise handelt es sich bei dem Fehlererkennungscode, der bei einem Zugriff auf den Stapelspeicher 28 generiert wird, um eine Prüfsumme. Eine bevorzugte Prüfsumme kann beispielsweise mittels einer zyklischen Redundanzprüfung ("Cyclic Redundancy Check"; CRC) generiert werden, mit der die Integrität der auf dem Stapelspeicher 28 abgelegten Datenelemente feststellbar ist. Vorzugsweise kann es sich gemäß alternativer Ausführungsformen bei dem Fehlererkennungscode um eine kryptographische Prüfsumme handeln, wobei die kryptographische Prüfsumme unter Verwendung eines kryptographischen Geheimnisses erzeugt wird, insbesondere unter Verwendung eines symmetrischen und/ oder asymmetrischen kryptographischen Verfahrens. Dabei können beliebige, an sich aus dem Stand der Technik bekannte Verfahren zur Generierung solcher Prüfsummen verwendet werden, insbesondere basierend auf kryptographischen Hash-Funktionen, wie z. B. SHA-1, MD5, HMAC-SHA1, HMAC-MD5, AES-CBC-MAC. Ebenso kann der Fehlererkennungscode basierend auf Signaturen mit geeigneten Signatur-Algorithmen generiert werden, wie z. B. RSA, DSA, EC-DSA und dergleichen. Neben den vorstehend erwähnten bevorzugten Fehlererkennungscodes ist dem Fachmann eine Vielzahl von weiteren Fehlererkennungscodes bekannt, die erfindungsgemäß dazu geeignet sind, die Integrität der auf dem Stapelspeicher 28 abgelegten Datenelemente zu überprüfen. Für die Details zu weiteren erfindungsgemäß einsetzbaren Fehlererkennungscodes wird auf das Kapitel 6.5 des Buches "Handbuch der Chipkarten" von W. Rankl und W. Effing, 5. Auflage, 2008, verwiesen, auf das hiermit vollumfänglich Bezug gen genommen wird.

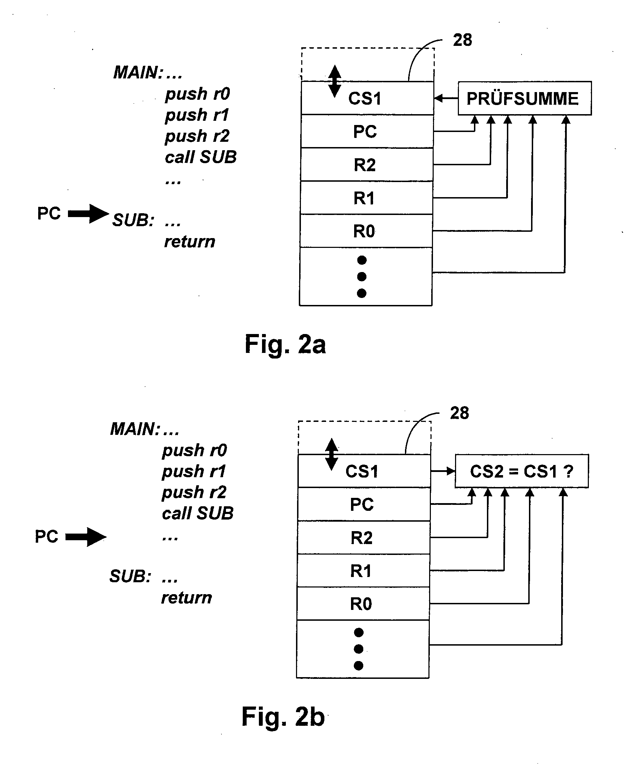

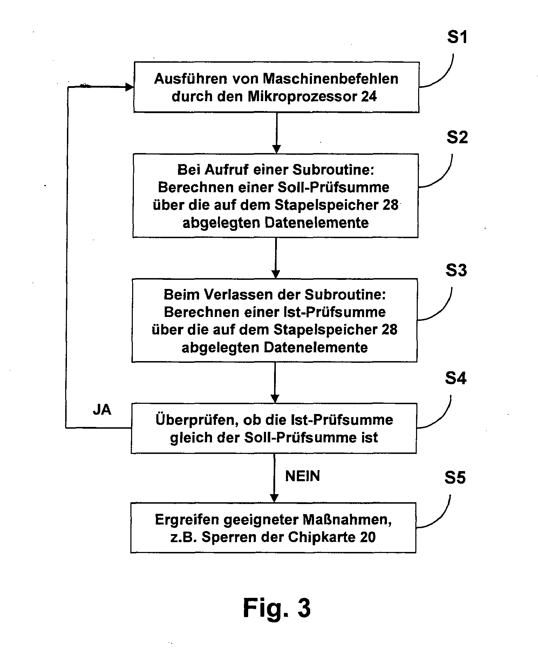

Unter weiterer Bezugnahme auf die Figuren 2a und 2b sowie die Figur 3 wird nachstehend eine bevorzugte Ausführungsform der Erfindung beschrieben, bei der eine Überprüfung der Integrität der auf dem Stapelspeicher 28 abgelegten Datenelemente beim Aufrufen und Verlassen einer Subroutine eines vom Mikroprozessor 24 ausgeführten Computerprogramms erfolgt. Dabei zeigen die Figuren 2a und 2b schematische Darstellungen dieses Computerprogramms und des Stapelspeichers 28 zu zwei Zeitpunkten bei der Abarbeitung des Computerprogramms durch den Mikroprozessor 24, nämlich zum einen beim Aufrufen einer Subroutine und zum anderen beim Verlassen dieser Subroutine. Figur 3 zeigt ein Ablaufdiagramm, das die Funktionsweise des Mikroprozessors 24 gemäß dieser bevorzugten Ausführungsform der Erfindung veranschaulicht.

Jeweils auf der linken Seite der Figuren 2a und 2b ist in Form eines an die Assemblersprache angelehnten Pseudo-Codes ein beispielhaftes Computerprogramm dargestellt, das vom Mikroprozessor 24 abgearbeitet wird und beispielhaft die Arbeitsweise des Mikroprozessors 24 gemäß einer bevorzugten Ausführungsform der Erfindung veranschaulicht. Das in den Figuren 2a und 2b dargestellte beispielhafte Computerprogramm zur Ausführung durch den Mikroprozessor 24 besteht aus einer Hauptroutine "MAIN" und wenigstens einer Subroutine "SUB". In den Figuren 2a und 2b ist jeweils derjenige Befehl durch einen fettgedruckten Pfeil gekennzeichnet, auf den momentan der Programmzähler PC 42 der Steuereinheit 40 zeigt und der somit als nächstes vom Mikroprozessor 24 ausgeführt wird. In Figur 2a zeigt der Programmzähler PC 42 beispielhaft auf den ersten Befehl der Subroutine "SUB", die mittels des vorhergehenden Befehls "call SUB" in der Hauptroutine aufgerufen worden ist, und in Figur 2b zeigt der Programmzähler PC 42 beispielhaft auf den Befehl in der Hauptroutine "MAIN", der dem Befehl "call SUB" folgt.

Jeweils auf der rechten Seite der Figuren 2a und 2b ist schematisch der aktuelle Zustand des vom Mikroprozessor 24 verwalteten Stapelspeichers 28 beispielhaft dargestellt. Vor dem Aufrufen der Subroutine "SUB" sind beispielhaft die Inhalte der Register R0, R1 und R2 der Recheneinheit 30 des Mikroprozessors 24 jeweils mittels eines expliziten "push"-Befehls der Reihe nach auf dem Stapelspeicher 28 abgelegt worden. Dies kann beispielsweise dann vorteilhaft sein, wenn die Inhalte der Register R0, R1 und R2 der Subroutine "SUB" als lokale Variablen oder Parameter übergeben werden sollen. Selbstverständlich können sich auf dem Stapelspeicher 28 unterhalb der Inhalte der Register R0, R1 und R2 (d.h. in der Regel bei höheren Adressen des durch die Speichereinheit 26 bereitgestellten Arbeitsspeichers) noch weitere Datenelemente befinden, die zu einem früheren Zeitpunkt auf dem Stapelspeicher 28 abgelegt worden sind, wie dies durch die Punkte in den Figuren 2a und 2b angedeutet ist.

Wie bereits vorstehend beschrieben, können einige durch den Mikroprozessor 24 ausgeführte Befehle ein implizites Ablegen oder Entfernen von bestimmten Datenelementen auf dem Stapelspeicher 28 umfassen. Dies wird in den Figuren 2a und 2b beispielhaft anhand des Programmzählers PC 42 verdeutlicht, der bei der Ausführung des Befehls "call SUB" durch den Mikroprozessor 24 implizit auf dem Stapelspeicher 28 abgelegt wird. Der Inhalt des auf dem Stapelspeicher 28 abgelegten Programmzählers PC 42 dient als Rücksprungadresse, zu welcher der Mikroprozessor 24 nach Beendigung der Subroutine "SUB", was in der Regel durch den Befehl "return" angezeigt wird, zurückspringt, um an derselben Stelle, von wo er den Sprung in die Subroutine "SUB" aus unternommen hat, die Abarbeitung des Programms fortzusetzen. Selbstverständlich kann der Mikroprozessor 24 dazu ausgestaltet sein, wie vorstehend beschrieben, bei einem Aufruf einer Subroutine, beispielsweise mittels des "call"-Befehls, andere oder weitere Register der Recheneinheit 30 und/ oder der Steuereinheit 40 implizit auf dem Stapelspeicher 28 abzulegen oder von diesem zu entfernen.

Figur 3 zeigt ein Ablaufdiagram, das die Arbeitsweise des Mikroprozessors 24 gemäß dieser bevorzugten Ausführungsform der Erfindung veranschaulicht. Falls bei der Ausführung von Maschinenbefehlen durch den Mikroprozessor 24 (siehe Schritt S1 von Figur 3) durch den Aufruf einer Subroutine auf den Stapelspeicher 28 zugegriffen wird, indem beispielsweise, wie vorstehend beschrieben Datenelemente auf dem Stapelspeicher 28 abgelegt werden, generiert der Mikroprozessor 24 in Schritt S2 von Figur 3 einen Soll-Fehlererkennungscode ("error detection code"; EDC) vorzugsweise in Form einer Soll-Prüfsumme CS1 über die auf dem Stapelspeicher 28 abgelegten Datenelemente. Vorzugsweise wird anschließend die Soll-Prüfsumme CS1 zuoberst auf dem Stapelspeicher 28 abgelegt, wie dies schematisch auch in Figur 2a dargestellt ist. Wenn die Subroutine abgearbeitet worden ist und wieder in die Hauptroutine zurückgesprungen werden soll, wird ein Ist-Fehlererkennungscode in Form einer Ist-Prüfsumme CS2 über die auf dem Stapelspeicher 28 abgelegten Datenelemente generiert (siehe Schritt S3 von Figur 3). Um sicherzustellen, dass während des Ausführens der Subroutine, kein Angriff zu einer Änderung der auf dem Stapelspeicher 28 abgelegten Datenelemente geführt hat, wird in Schritt S4 von Figur 3 überprüft, ob der beim Aufruf der Subroutine generierte Soll-Fehlererkennungscode in Form der Soll-Prüfsumme CS1 gleich dem beim Verlassen der Subroutine generierten Ist-Fehlererkennungscode in Form der Ist-Prüfsumme CS2 ist, wie dies schematisch auch in Figur 2b dargestellt ist. Falls die beiden Prüfsummen CS1 und CS2 übereinstimmen, kann normal mit der Abarbeitung der weiteren Maschinenbefehle der Hauptroutine in Schritt S1 von Figur 1 fortgefahren werden. Vor der weiteren Abarbeitung der weiteren Maschinenbefehle der Hauptroutine wird vorzugsweise der auf dem Stapelspeicher 28 hinterlegte Soll-Fehlererkennungscode in Form der ersten Prüfsumme CS1 von diesem wieder entfernt.

Ferner können bei diesem Schritt auch die beim Aufruf der Subroutine, beispielsweise mittels des "call"-Befehls implizit auf dem Stapelspeicher 28 abgelegten Datenelemente wieder vom Stapelspeicher 28 implizit entfernt werden.

Falls bei der Überprüfung in Schritt S4 von Figur 3 festgestellt wird, dass die beiden Prüfsummen CS1 und CS2 nicht übereinstimmen, kann nicht ausgeschlossen werden, dass während des Abarbeitens der Subroutine eines oder mehrere der auf dem Stapelspeicher 28 abgelegten Datenelemente durch einen Angriff auf die Chipkarte 20 korrumpiert worden ist, beispielsweise indem durch den Angriff ein oder mehrere Bits wenigstens eines auf dem Stapelspeicher 28 abgelegten Datenelements invertiert worden sind. In diesem Fall werden gemäß Schritt S5 von Figur 3 vorzugsweise geeignete Gegenmaßnahmen ergriffen, beispielsweise um zu verhindern, dass das wenigstens eine durch den Angriff korrumpierte Datenelement auf dem Stapelspeicher 28 zu einer Fehlfunktion der Chipkarte 20 führt. Bei besonders sicherheitskritischen Anwendungen kann in einem solchen Fall beispielsweise vorgesehen sein, den weiteren normalen Ablauf des vom Mikroprozessor 24 ausgeführten Computerprogramms abzubrechen und die Chipkarte 20 zu sperren.

Bei der vorstehend beschriebenen und in den Figuren 2a, 2b und 3 dargestellten bevorzugten Ausführungsform wird der Soll-Fehlererkennungscode in Form der Prüfsumme CS1 beim Aufrufen der Subroutine "SUB" generiert. Wie dies jedoch in den Figuren 2a und 2b durch Punkte angedeutet ist, kann gemäß alternativer Ausführungsformen auch der Fall eintreten, dass tiefer unten auf dem Stapelspeicher 28, d.h. in der Regel bei höheren Adressen des Stapelspeichers 28 wenigstens ein Soll-Fehlererkennungscode abgelegt ist, der bei einem früheren Zugriff auf den Stapelspeicher 28 auf diesem abgelegt worden ist und nicht entfernt worden ist. Dieser Fall kann gemäß alternativer Ausführungsformen der Erfindung beispielsweise dann eintreten, wenn vor dem Rücksprung in die Hauptroutine aus einer Subroutine eine weitere Subroutine eines vom Mikroprozessor 24 ausgeführten Computerprogramms aufgerufen wird. Gemäß alternativer Ausführungsformen der Erfindung ist in diesem Fall, d.h. beim Aufruf einer Subroutine aus einer Subroutine, vorgesehen, dass der Soll-Fehlererkennungscode über alle auf dem Stapelspeicher 28 hinterlegten Datenelemente generiert wird, d.h. alle auf dem Stapelspeicher 28 abgelegten Datenelemente, inklusive des/ der Soll-Fehlererkennungscode(s), der bzw. die bei einem früheren Zugriff auf den Stapelspeicher generiert und nicht entfernt worden sind. Alternativ kann in diesem Fall lediglich der zuletzt auf dem Stapelspeicher 28 abgelegte und nicht entfernte Soll-Fehlererkennungscode zusammen mit den im Stapelspeicher 28 darüber liegenden, d.h. in der Regel bei niedrigeren Adressen hinterlegten Datenelementen in die Generierung des weiteren Soll-Fehlererkennungscodes einfließen.

Wie der Fachmann erkennt, kann der vorstehend beschriebene erfindungsgemäße Mechanismus zum Erkennen von Angriffen auf den portablen Datenträger 20 prinzipiell in Hardware, Software oder in einer Kombination aus Hardware und Software implementiert werden. Beispielsweise könnte der portable Datenträger 20 ferner, wie dies in Figur 1 dargestellt ist, eine Prüfeinheit 50 mit einer Prüfsummenlogik umfassen, die dazu ausgestaltet ist, den erfindungsgemäßen Mechanismus zur Erkennung und zur Abwehr von Angriffen auf den portablen Datenträger 20 umzusetzen, insbesondere die Generierung von Fehlererkennungscodes und/ oder der Vergleich von Fehlerkennungscodes.

Da für die jeweilige Generierung eines Fehlererkennungscodes über die auf dem Stapelspeicher 28 hinterlegten Datenelemente in der Regel Ressourcen des portablen Datenträgers 20 in Anspruch genommen werden, kann es gemäß bevorzugter Ausführungsformen der Erfindung vorteilhaft sein, nicht bei jedem, sondern nur bei bestimmten Zugriffen auf den Stapelspeicher 28 eine Überprüfung der Integrität der auf dem Stapelspeicher 28 hinterlegten Datenelemente mittels der Generierung eines aktuellen Fehlererkennungscodes und des Vergleichs des aktuellen Fehlererkennungscodes mit einem vorherigen Fehlererkennungscode durchzuführen. Gemäß bevorzugter Ausführungsformen der Erfindung ist daher vorgesehen, dass ein Fehlererkennungscode nur bei jedem n-ten Zugriff auf den Stapelspeicher generiert wird, wobei n eine natürliche Zahl größer eins ist. Selbstverständlich sind auch Ausführungsformen denkbar, bei denen sich n von Zugriff zu Zugriff ändert.

Obgleich beim Großteil bekannter Mikroprozessoren ein Stapelspeicher unter Verwendung eines speziellen Registers in Form eines Stapelregisters implementiert ist, kann die Erfindung auch vorteilhaft bei Mikroprozessoren eingesetzt werden, bei denen ein allgemeines Register oder Mehrzweckregister als Register für den Stack-Pointer eingesetzt wird. Wie dies dem Fachmann bekannt ist, spricht man im ersteren Fall von einem Hardware-Stack und im letzteren Fall von einem Software-Stack.

### Bezugszeichenliste:

- 10: Leseeinheit
- 12: Kommunikationsschnittstelle
- 20: Chipkarte
- 22: Kommunikationsschnittstelle
- 24: Mikroprozessor
- 26: Speichereinheit
- 28: Stapelspeicher (Stack)
- 30: Recheneinheit
- 32: ALU
- 34, 36, 38: Register R0, R1 und R2
- 40: Steuereinheit
- 42: Programmzähler PC
- 44: Befehlsregister IR
- 46: Statusregister SR
- 48: Stapelregister bzw. Stapelzeiger (Stack-Pointer) SP
- 50: Prüfeinheit

## Patentansprüche

1. Verfahren zum Betreiben eines portablen Datenträgers (20) mit einem Mikroprozessor (24) zur Ausführung von Befehlen eines Computerprogramms, einer Speichereinheit (26) zur Speicherung von Datenelementen und einem vom Mikroprozessor (24) verwalteten Stapelspeicher (28), der in der Speichereinheit (26) implementiert ist, wobei das Verfahren die folgenden Schritte umfasst:
(a) das Generieren eines Ist-Fehlererkennungscodes über die auf dem Stapelspeicher (28) abgelegten Datenelemente bei einem Zugriff des Mikroprozessors (24) auf den Stapelspeicher (28), bei dem wenigstens ein Datenelement auf dem Stapelspeicher (28) abgelegt und/oder von diesem entfernt werden soll, und
(b) das Vergleichen des in Schritt (a) generierten Ist-Fehlererkennungscodes mit einem Soll-Fehlererkennungscode, der bei einem vorhergehenden Zugriff des Mikroprozessors (24) auf den Stapelspeicher (28) über die auf dem Stapelspeicher (28) abgelegten Datenelemente generiert worden ist.

2. Verfahren nach Anspruch 1, wobei, falls beim Schritt des Vergleichens festgestellt wird, dass der in Schritt (a) generierte Ist-Fehlererkennungscode nicht mit dem Soll-Fehlererkennungscode übereinstimmt, der bei einem vorhergehenden Zugriff des Mikroprozessors (24) auf den Stapelspeicher (28) über die auf dem Stapelspeicher (28) abgelegten Datenelemente generiert worden ist, der weitere Betrieb des portablen Datenträgers (20) gesperrt wird, in eine Endlosschleife eingetreten wird, ein Interrupt ausgelöst wird und/oder andere geeignete Gegenmaßnahmen ergriffen werden.

3. Verfahren nach Anspruch 1, wobei das Verfahren den weiteren Schritt umfasst, dass für den Fall, dass beim Schritt des Vergleichens festgesellt wird, dass der in Schritt (a) generierte Ist-Fehlererkennungscode mit dem Soll-Fehlererkennungscode übereinstimmt, der Zugriff auf den Stapelspeicher (28) vom Mikroprozessor (24) durchgeführt wird, d.h. wenigstens ein Datenelement auf dem Stapelspeicher (28) abgelegt und/oder von diesem entfernt wird, wobei vorzugsweise vorher noch, sofern der Soll-Fehlererkennungscode auf dem Stapelspeicher (28) abgelegt ist, der Soll-Fehlererkennungscode vom Stapelspeicher (28) entfernt wird.

4. Verfahren nach Anspruch 3, wobei bei dem weiteren Schritt ferner vorgesehen ist, dass ein neuer Soll-Fehlererkennungscode über die nunmehr, d.h. nach dem Zugriff durch den Mikroprozessor (24) auf dem Stapelspeicher (28) abgelegten Datenelemente generiert wird und vorzugsweise oberhalb der nunmehr auf dem Stapelspeicher (28) abgelegten Datenelemente auf dem Stapelspeicher (28) abgelegt wird, um bei einem erneuten Zugriff des Mikroprozessors (24) auf den Stapelspeicher (28) als Soll-Fehlererkennungscode für einen Vergleich mit einem bei dem erneuten Zugriff generierten Ist-Fehlererkennungscode zur Verfügung zu stehen.

5. Verfahren nach Anspruch 1, wobei beim Aufruf einer Subroutine des vom Mikroprozessor (24) ausgeführten Computerprogramms durch eine aufrufende Routine des vom Mikroprozessor (24) ausgeführten Computerprogramms ein Ist-Fehlererkennungscode über die auf dem Stapelspeicher (28) abgelegten Datenelemente generiert wird und beim Rücksprung aus dieser Subroutine in die aufrufende Routine des vom Mikroprozessor (24) ausgeführten Computerprogramms ein Soll-Fehlererkennungscode über die auf dem Stapelspeicher (28) abgelegten Datenelemente generiert wird, der mit dem Ist-Fehlererkennungscode verglichen wird.

6. Verfahren nach Anspruch 1, wobei nur bei jedem n-ten Zugriff auf den Stapelspeicher (28) ein Ist-Fehlererkennungscode über die auf dem Stapelspeicher (28) abgelegten Datenelemente generiert wird und mit dem bei einem vorhergehenden Zugriff auf den Stapelspeicher (28) generierten Soll-Fehlererkennungscode verglichen wird, wobei n eine natürliche Zahl größer eins ist.

7. Verfahren nach Anspruch 1, wobei es sich bei dem Fehlererkennungscode um eine Prüfsumme, eine CRC-Prüfsumme oder eine kryptographische Prüfsumme handelt, wobei die kryptographische Prüfsumme unter Verwendung eines symmetrischen und/ oder asymmetrischen kryptographischen Verfahrens erzeugt wird, insbesondere basierend auf kryptographischen Hash-Funktionen, wie z. B. SHA-1, MD5, HMAC-SHA1, HMAC-MD5, AES-CBC-MAC und dergleichen, oder basierend auf Signaturen mit geeigneten Signatur-Algorithmen, wie z. B. RSA, DSA, EC-DSA und dergleichen.

8. Verfahren nach einem der Ansprüche 1 bis 7, wobei der Mikroprozessor (24) zur Verwaltung des Stapelspeichers (28) in der Speichereinheit (26) ein Stapelregister (48) aufweist.

9. Verfahren nach einem der Ansprüche 1 bis 7, wobei der portable Datenträger (20) ferner eine Prüfeinheit (50) umfasst, die dazu ausgestaltet ist, den Schritt des Generierens eines Fehlererkennungscodes über die auf dem Stapelspeicher (28) abgelegten Datenelemente und/ oder den Schritt des Vergleichens der Fehlererkennungscodes durchzuführen.

10. Portabler Datenträger (20) mit einem Mikroprozessor (24) zur Abarbeitung der Befehle eines Computerprogramms, einer Speichereinheit (26) zur Speicherung von Datenelementen und einem vom Mikroprozessor (24) verwalteten Stapelspeicher (28), der in der Speichereinheit (26) implementiert ist, wobei der portable Datenträger(20) dazu ausgestaltet ist, das Verfahren nach einem der vorhergehenden Ansprüche durchzuführen.
